# FASCICULE DE BREVET EUROPEEN

(11) **EP 0 999 932 B1**
(45) Date de publication et mention de la délivrance du brevet: **29.12.2004**
(21) Numéro de dépôt: 99920918.2
(22) Date de dépôt: 26.05.1999
(51) Int. Cl.: B32B 27/32, C08L 51/06, C09J 151/06, C08F 255/02

(54) **STRUCTURES COMPRENANT DU POLYETHYLENE MOYENNE DENSITE ET LIANTS UTILISES DANS CES STRUCTURES**
STRUKTUREN AUF BASIS VON MITTELDICHTEN POLYETHYLEN UND IHREN BINDEMITTELN
STRUCTURES COMPRISING MEAN DENSITY POLYETHYLENE AND BINDERS USED IN SAID STRUCTURES

(30) Priorité: 26.05.1998 FR 9806601
(43) Date de publication de la demande: 17.05.2000
(73) Titulaire: Atofina, 92800 Puteaux (FR)
(72) Inventeur: JACQUEMET, Régis, F-62000 Daunville (FR); PERRET, Patrice, F-27470 Serquigny (FR); ROBERT, Patrice, F-27170 Beaumont le Roger (FR)
(74) Mandataire: Neel, Henry
(86) Numéro de dépôt international: PCT/FR1999/001226
(87) Numéro de publication internationale: WO 1999/061246

(56) Documents cités:
- EP-A- 0 802 207
- EP-A- 0 816 460
- US-A- 4 419 408
- US-A- 4 477 532

## Description

La présente invention concerne des structures comprenant du polyéthylène moyenne densité et des liants de coextrusion utilisés dans ces structures.

Les liants de coextrusion sont utiles par exemple pour fabriquer des matériaux multicouches pour l'emballage. On peut citer les matériaux comprenant un film de polyamide (PA) et un film de polyéthylène (PE), le film de polyéthylène pouvant être laminé sur le film de polyéthylène ou coextrudé avec le polyamide. Le liant de coextrusion est disposé entre le polyéthylène et le polyamide pour une bonne adhésion du PA et du PE. Ces matériaux multicouches peuvent être des structures à trois couches PE/liant/EVOH dans lesquelles EVOH désigne un copolymère de l'éthylène et de l'alcool vinylique ou un copolymère éthylène acétate de vinyle (EVA) saponifié en partie ou en totalité ou des structures à cinq couches PE/liant/EVOH/liant/PE.

Le document EP 0 816 460 Al est relatif à un liant de coextrusion utile pour foire une structure multicouche de type PEHD / liant / EVOH ou alliage d'EVOH ou PA.

Le liant de coextrusion est obtenu par greffage avec un anhydride d'acide carboxylique insaturé ou ses dérivés d'un copolymère d'éthylène et d'un élastomère de type EPR, le mélange greffé étant éventuellement dilué dans un autre copolymère d'éthylène.

Les structures obtenues sont utiles pour fabriquer des emballages souples ou rigides tels que des sachets, des bouteilles pour des produits alimentaires.

La présente invention concerne une structure multicouche comprenant successivement :
- **une couche** de résine polaire azotée ou oxygénée telle qu'une couche (E) d'une résine polyamide, d'un copolymère saponifié d'éthylène et d'acétate de vinyle, d'une résine polyester, d'un oxyde minéral déposé sur un polymère tel que le PE, le polyéthylène téréphtalate ou l'EVOH, ou bien une couche métallique,
- une **couche** constituée d'un mélange utilisé comme liant de coextrusion et comprenant :
   ■ (A) 50 à 100 parties d'un polyéthylène homo ou copolymère comprenant au moins 75% (en moles) d'éthylène de densité comprise entre 0,910 et 0,98 g/cm³,
   ■ (B) 0 à 50 parties d'un polymère choisi parmi (B1) le polypropylène homo ou copolymère, comprenant au moins 75% (en moles) de propylène (B2) le poly(1-butène) homo ou copolymère et (B3) le polystyrène homo ou copolymère,
   ■ la quantité de (A) + (B) étant de 100 parties,
   ■ le mélange de (A) et (B) étant greffé par au moins 0,5 % en poids d'un monomère fonctionnel,
   ■ ce mélange greffé étant lui même dilué dans au moins un polyéthylène homo ou copolymère (C) ou dans au moins un polymère à caractère élastomérique (D) ou dans un mélange de (C) et (D),
- une couche (F) en polyéthylène de moyenne densité (PEMD) c'est-à-dire de densité comprise entre 0,94 et 0,950.

Parmi les structures de l'invention celles concernant les surfaces métalliques sont particulièrement utiles. La présente invention est utile pour les surfaces métalliques revêtues de polyéthylène et plus particulièrement des tubes dont la surface extérieure est revêtue de PEMD.

Des revêtements tri-couches sont couramment utilisés pour protéger la surface extérieure des tuyaux métalliques destinés à la construction d'oléoduc ou de gazoduc. Ils sont composés de la manière suivante en partant de la surface métallique :
- primaire : résine époxy ~ 70 µm
- liant réactif avec les époxy ~ 250 µm
- polyéthylène basse densité (PEBD) noir stabilisé ~ 2,5 mm.

Ces systèmes de protection présentent des performances (tenue à la corrosion, adhésion, résistance à l'indentation) satisfaisantes jusqu'à des températures de 60°C maximum. Au-delà, l'adhésion et la résistance à l'indentation ne sont plus suffisantes pour assurer l'intégrité du revêtement lors du stockage, de la pose ou du service.

Il est donc alors nécessaire d'utiliser au niveau de la couche extérieure un PE présentant des caractéristiques mécaniques et thermiques plus élevées tel qu'un PEMD. Toutefois, compte tenu des niveaux d'adhésion recherchés sur une plage de température plus importante il a été nécessaire de mettre au point un système d'adhésif présentant une comptabilité avec le PEMD et une bonne réactivité avec le primaire époxy afin d'obtenir ces niveaux d'adhérence.

Le liant de la présente invention permet d'obtenir une force de pelage du PEMD d'au moins :
800 N/5 cm à 23°C
500 N/5 cm à 50°C
200 N/5 cm à 70°C
150 N/5 cm à 80°C

Cette force est mesurée selon la norme DIN 30670.

S'agissant de la couche de liant, (A) est choisi parmi les polyéthylènes homo ou copolymères.

A titre de comonomères, on peut citer :
- les alpha-oléfines, avantageusement celles ayant de 3 à 30 atomes de carbone.
   Des exemples d'alpha-oléfines ayant 3 à 30 atomes de carbone comme comonomères éventuels comprennent le propylène, 1-butène, 1-pentène, 3-méthyl-1-butène, 1-hexène, 4-méthyl-1-pentène, 3-méthyl-1-pentène, 1-octène, 1-décène, 1-dodécène, 1-tétradécène, 1-hexadécène, 1-octacocène, 1-eicocène, 1-dococène, 1-tétracocène, 1-hexacocène, 1-octacocène et 1-triacontène. Ces alpha-oléfines peuvent être utilisées seules ou en mélange de deux ou de plus de deux.
- les esters d'acides carboxyliques insaturés tels que par exemple les (méth)acrylates d'alkyle, les alkyles pouvant avoir jusqu'à 24 atomes de carbone.
   Des exemples d'acrylate ou méthacrylate d'alkyle sont notamment le méthacrylate de méthyle, l'acrylate d'éthyle, l'acrylate de n-butyle, l'acrylate d'isobutyle, l'acrylate de 2-éthylhexyle.
- les esters vinyliques d'acides carboxyliques saturés tels que par exemple l'acétate ou le propionate de vinyle.
- les diènes tels que par exemple le 1,4-hexadiène
- (A) peut comprendre plusieurs comonomères.

Avantageusement le polymère (A), qui peut être un mélange de plusieurs polymères, comprend au moins 75 % (en moles) d'éthylène. La densité de (A) est avantageusement comprise entre 0,910 et 0,98 g/cm³. le MFI (indice de viscosité à 190°C. 2,16 kg) est compris avantageusement entre 1 et 50 g/10 min.

A titre d'exemples de polymères (A) on peut citer :
- le polyéthylène basse densité (LDPE)
- le polyéthylène haute densité (HDPE)
- le polyéthylène linéaire basse densité (LLDPE)
- le polyéthylène obtenu par catalyse métallocène, c'est-à-dire les polymères obtenus par copolymérisation d'éthylène et d'alpha-oléfine telle que propylène, butène, héxène ou octène en présence d'un catalyseur monosite constitué généralement d'un atome de zirconium ou de titane et de deux molécules cycliques alkyles liées au métal. Plus spécifiquement, les catalyseurs métallocènes sont habituellement composés de deux cycles cyclopentadiéniques liés au métal. Ces catalyseurs sont fréquemment utilisés avec des aluminoxanes comme cocatalyseurs ou activateurs, de préférence le méthylaluminoxane (MAO). Le hafnium peut aussi être utilisé comme métal auquel le cyclopentadiène est fixé. D'autres métallocènes peuvent inclure des métaux de transition des groupes IV A, V A et VI A. Des métaux de la série des lanthamides peuvent aussi être utilisés.

Avantageusement (A) est choisi parmi (i) les LLDPE de densité 0,910 à 0,930 le comonomère ayant de 4 à 8 atomes de carbone et (ii) le PEHD de densité au moins 0,945 et de préférence 0,950 à 0,980.

Dans la suite du texte LLDPE C4 signifie un LLDPE dont le comonomère a 4 atomes de carbone.

S'agissant de (B1) c'est un polypropylène homo- ou copolymère. A titre de comonomères, on peut citer :
- les alpha-oléfines, avantageusement celles ayant de 3 à 30 atomes de carbone. Des exemples de telles alpha-oléfines sont les mêmes que pour (A) sauf à remplacer le propylène par l'éthylène dans la liste
- les diènes
   (B1) peut être aussi un copolymère à blocs polypropylène.
      A titre d'exemples de polymère (B1) on peut citer
      - le polypropylène
      - les mélanges de polypropylène et d'EPDM ou d'EPR.

      Avantageusement le polymère (B1), qui peut être un mélange de plusieurs polymères, comprend au moins 75 % en moles de propylène.
   (B2) est choisi parmi le poly (1-butène) ou les copolymères du 1-butène avec l'éthylène ou une autre alpha-oléfine ayant de 3 à 10 carbones, sauf le propylène déjà cité en (B1).
   (B3) est choisi parmi le polystyrène ou les copolymères du styrène. Parmi les copolymères, on peut citer à titre d'exemples les diènes ayant de 4 à 8 atomes de carbone. Avantageusement (B) est le polypropylène homo ou copolymère.

La densité de (B) peut être comprise entre 0,86 et 0,98 g/cm³. Le MFI est compris avantageusement entre 0,8 et 30 g/10 min.

Le mélange de (A) et (B) est greffé par un monomère fonctionnel (on utilise aussi le terme "cogreffé"). A titre d'exemples de fonctions greffées on peut citer les acides carboxyliques et leurs dérivés, les chlorures d'acides, les isocyanates, les oxazolines, les époxydes, les amines ou les hydroxydes.

Des exemples d'acides carboxyliques insaturés sont ceux ayant 2 à 20 atomes de carbone tels que les acides acrylique, méthacrylique, maléique, fumarique et itaconique. Les dérivés fonctionnels de ces acides comprennent par exemple les anhydrides, les dérivés esters, les dérivés amides, les dérivés imides et les sels métalliques (tels que les sels ou métaux alcalins) des acides carboxyliques insaturés.

Des acides dicarboxyliques insaturés ayant 4 à 10 atomes de carbone et leurs dérivés fonctionnels, particulièrement leurs anhydrides, sont des monomères de greffage particulièrement préférés (par exemple l'anhydride maléique).

Ces monomères de greffage comprennent par exemple les acides maléique, fumarique, itaconique, citraconique, allyisuccinique, cyclohex-4-ène-1,2-dicarboxylique, 4―méthyl-cyclohex-4-ène-1,2-dicarboxylique, bicyclo(2,2,1)hept-5-ène-2,3-dicarboxylique, x―méthylbicyclo(2,2,1-hept-5-ène-2,3-dicarboxylique, les anhydrides maléique, itaconique, citraconique, allylsuccinique, cyclohex-4-ène-1,2-dicarboxylique, 4―méthyténecyclohex-4-ène-1,2-dicarboxylique, bicyclo(2,2,1)hept-5-ène-2,3-dicarboxylique, et x―méthylbicyclo(2,2,1)hept-5-ène-2,2-dicarboxylique.

Des exemples d'autres monomères de greffage comprennent des esters alkyliques en C₁-C₈ ou des dérivés esters glycidyliques des acides carboxyliques insaturés tels que acrylate de méthyle, méthacrylate de méthyle, acrylate d'éthyle, méthacrylate d'éthyle, acrylate de butyle, méthacrylate de butyle, acrylate de glycidyle, méthacrylate de glycidyle, maléate de mono-éthyle, maléate de diéthyle, fumarate de monométhyle, fumarate de diméthyle, itaconate de monométhyle, et itaconate de diéthyle ; des dérivés amides des acides carboxyliques insaturés tels que acrylamide, méthacrylamide, monoamide maléique, diamide maléique, N-monoéthylamide maléique, N,N-diéthylamide maléique, N―monobutylamide maléique, N,N-dibutylamide maléique, monoamide furamique, diamide furamique, N-monoéthylamide fumarique, N,N-diéthylamide fumarique, N-monobutylamide fumarique et N,N-dibutylamide furamique ; des dérivés imides des acides carboxyliques insaturés tels que maléimide, N-butylmaléimide et N-phénylmaléimide ; et des sels métalliques d'acides carboxyliques insaturés tels que acrylate de sodium, méthacrylate de sodium, acrylate de potassium, et méthacrylate de potassium.

Divers procédés connus peuvent être utilisés pour greffer un monomère de greffage sur le mélange de (A) et (B).

Par exemple, ceci peut être réalisé en chauffant les polymères (A) et (B) à température élevée, environ 150° à environ 300°C, en présence ou en l'absence d'un solvant avec ou sans initiateur de radicaux. Des solvants appropriés qui peuvent être utilisés dans cette réaction sont le benzène, toluène, xylène, chlorobenzène, cumène, etc. Des initiateurs de radicaux appropriés qui peuvent être utilisés comprennent le t-butyl-hydroperoxyde, cumène―hydroperoxyde, di-isopropyl-benzène-hydroperoxyde, di-t-butyl-peroxyde, t-butyl-cumyl-peroxyde, (dicumyl-peroxyde, 1,3-bis-(t-butylperoxy-isopropyl)benzène, acétyl-peroxyde, benzoyl-peroxyde, iso-butyryl-peroxyde, bis-3,5,5-triméthyl-hexanoyl-peroxyde, et méthyl-éthyl-cétone-peroxyde.

Dans le mélange de (A) et (B) modifié par greffage obtenu de la façon susmentionnée, la quantité du monomère de greffage peut être choisie d'une façon appropriée mais elle est de préférence de 0,5 à 10%, mieux de 1 à 5%, par rapport au poids de (A) et (B) greffés.

La quantité du monomère greffé est déterminée par dosage des fonctions succiniques par spectroscopie IRTF.

Le mélange cogreffé de (A) et (B) est dilué dans un polyéthylène (C) ou dans un polymère à caractère élastomérique (D) ou dans un mélange de (C) et (D).

Le polyéthylène (C) peut être choisi parmi les polymères (A). (C) est avantageusement un LLDPE dont le comonomère a 4 à 8 atomes de carbone. (C) a une densité d'au moins 0,9 et de préférence comprise entre 0,91 et 0,93.

Le MFI de (C) est avantageusement supérieur à 0,5 et de préférence compris entre 2 et 5.

(D) est un polymère à caractère élastomérique c'est-à-dire qu'il peut être un (i) élastomère au sens de ASTM D412 c'est-à-dire un matériau qui peut être étiré à température ambiante à deux fois sa largeur, maintenu ainsi 5 minutes puis quand il est relâché il revient à moins de 10% près à sa longueur initiale ou (ii) un polymère n'ayant pas exactement ces caractéristiques précédentes mais pouvant être étiré et revenir sensiblement à sa longueur initiale.

Avantageusement le MFI de (D) est compris entre 0,1 et 50.

A titre d'exemple de polymères (D) on peut citer :
- les EPR (éthylène propylène rubber) et les EPDM (éthylène propylène diène) ;
- les polyéthylènes obtenus par catalyse métallocène et de densité inférieure à 0,910 g/cm³ ;
- les polyéthylènes de type VLDPE (très basse densité) ;
- les élastomères styréniques tels que les SBR (styrène-butadiène-rubber), les copolymères blocs styrène-butadiène-styrène (SBS), les copolymères blocs styrène-éthylène/butène/styrène (SEBS) et les copolymères blocs styrène-isoprène-styrène (SIS).
- les copolymères de l'éthylène et d'au moins un ester d'acide carboxylique insaturé (déjà défini dans (A))
- les copolymères de l'éthylène et d'au moins un ester vinylique d'acide carboxylique saturé (déjà défini dans (A)).

La quantité de (C) ou (D) ou (C)+(D) est de 97 à 75 parties pour 3 à 25 parties de (A)+(B) greffés, la quantité de (A) + (B) + (C) + (D) étant de 100 parties.

Le mélange utilisé comme liant peut être fabriqué par les moyens habituels des thermoplastiques par mélange à l'état fondu dans des extrudeuses, bivis, BUSS, des malaxeurs ou des mélangeurs à cylindre. (A) et (B) peuvent être prémélangés à sec ou à l'état fondu puis être greffés à l'état fondu ou en solution dans un solvant. Ils peuvent aussi être ajoutés séparément dans un dispositif de mise en contact et malaxage (par exemple une extrudeuse) ainsi que le monomère de greffage et l'initiateur de radicaux. Après greffage au mélange éventuellement avec (C) ou (D).

Le mélange utilisé comme liant peut comprendre encore divers additifs tels que des antioxydants, des absorbeurs d'ultra-violets, des agents antistatiques, des pigments, des colorants, des agents de nucléation, des charges, des agents de glissement, des lubrifiants, des produits ignifuges et des agents anti-blocage.

Les exemples d'anti-oxydants sont le 2,6-di-t-butyl-p-crésol, O-t-butyl-p-crésol, tétrakis-[méthylène-3-(3,5-di-t-butyl-4-hydroxyphényl)propionate]méthane, la p―naphtylamine, et la para-phénylènediamine.

Les exemples d'absorbeurs d'ultra-violets sont la 2,4-dihydroxybenzophénone, le 2-(2'-hydroxy-3',5'-di-t-butyiphényl)-5-chlorobenzotriazole, 2-(2-hydroxy-3-t-butyl-5-méthylphényl)-5-chlorobenzotriazole, et le bis(2,2',6,6')-tétraméthyl-4-pipéridine)sébacate.

Les exemples d'agents antistatiques sont la lauryldiéthanolamine, palmityl-diéthanolamine, stéaryl-di-éthanolamine, oléyl-diéthanolamine, béhényl-diéthanolamine, polyoxyéthylène-alkylamines, le stéaryl-monoglycéride, et la 2-hydroxy-4-n-octoxybenzophénone.

Les exemples de colorants comprenant des pigments et des colorants sont le noir de carbone, blanc de titane, jaune de cadmium et bleu de phtalocyanine de cuivre.

Les exemples d'agents de nucléation sont le p―tert-butytbenzoate d'aluminium, dibenzylidène-sorbitol, et hydroxy-di-p-t-butylbenzoate d'aluminium.

Les exemples de charge sont les fibres de verres, fibres de carbone, talc, argile, silice, carbonate de calcium, sulfate de baryum, hydroxyde de magnésium, hydroxyde de calcium et oxyde de calcium.

Les exemples d'agents de glissement sont le stéaramide, oléamide et érucinamide.

Les exemples de lubrifiants sont le stéarate de calcium, stéarate de zinc, stéarate d'aluminium, stéarate de magnésium, et cire de polyéthylène.

Les exemples de produits ignifuges sont l'oxyde d'antimoine, le décabromobiphényl-éther, et la bis(3,5―dibromo-4-bromopropytoxyphényl)sulfone.

Les exemples d'agents anti-blocage sont le dioxyde de silicium et le polystyrène.

Les quantités de ces autres additifs peuvent être choisies parmi les quantités appropriées qui n'affectent pas d'une façon défavorable les liants de l'invention. Par exemple, rapportées au poids total de (A)+(B)+(C)+(D), les quantités appropriées sont d'environ 0,01 à environ 5% en poids pour les antioxydants ; environ 0,01 à environ 5% en poids pour les absorbeurs d'ultra-violets ; environ 0,01 à environ 1% en poids pour les agents antistatiques ; environ 0,01 à environ 5% en poids pour les agents colorants ; environ 0,01 à environ 5% en poids pour les agents de nucléation ; environ 0,1 à environ 60% en poids pour les charges ; environ 0,01 à environ 1% en poids pour les agents de glissement ; environ 0,01 à environ 1 % en poids pour les lubrifiants ; environ 0,1 à environ 50% en poids pour les produits ignifuges ; et environ 0,01 à environ 30% en poids pour les agents anti-blocage.

Des exemples de résines polaires préférées dans la couche (E) sont les résines de polyamide, un copolymère saponifié d'éthylène et d'acétate de vinyle, et les polyesters.

Plus spécifiquement, elles comprennent des polyamides synthétiques à longue chaîne ayant des motifs structurels du groupe amide dans la chaîne principale, tels que le PA-6, PA-6,6, PA-6,10, PA-11 et le PA-12 ; un copolymère saponifié d'éthylène et d'acétate de vinyle ayant un degré de saponification d'environ 90 à 100% en moles, obtenu en saponifiant un copolymère éthylène/acétate de vinyle ayant une teneur en éthylène d'environ 15 à environ 60% en moles ; des polyesters tels que le polyéthylène-téréphtalate, le polybutylène-téréphtalate, le polyéthylène naphténate et des mélanges de ces résines.

La couche d'oxyde minéral peut être par exemple de la silice, elle est déposée sur une couche de PE, PET ou EVOH.

La couche métallique peut être par exemple une feuille, une pellicule ou une feuille d'un métal tel que l'aluminium, le fer, le cuivre, l'étain et le nickel, ou un alliage contenant au moins un de ces métaux comme constituant principal. L'épaisseur de la pellicule ou de la feuille peut être convenablement choisie et elle est par exemple d'environ 0,01 à environ 0,2 mm. Il est de pratique courante de dégraisser la surface de la couche métallique avant de laminer sur elle le liant de l'invention. La surface métallique peut être quelconque, cependant, l'invention est particulièrement utile pour la surface extérieure des tuyaux, ces tuyaux pouvant avoir un diamètre extérieur par exemple jusqu'à 0,8 ou 1,5 m et une épaisseur de 2 à 25 mm.

On ne sortirait pas du cadre de l'invention si la structure précédente était associée à d'autres couches.

La présente invention concerne en particulier une surface métallique revêtue comprenant successivement au moins une couche de résine époxy disposée contre le métal, une couche du liant décrit plus haut et une couche de PEMD.

Le principe des résines epoxy est décrit par exemple dans KIRK-OTHMER Encyclopedia of Chemical Technology Vol. 9 - pages 267-289 3ème édition. Ces résines sont le plus souvent des polyglycidyléther d'un polyphénol.

On utilise avantageusement :
- les produits de condensation du bisphénol A et de l'épichlorhydrine ;
- les résines epoxy-crésol novolac (ECN) ;
- les epoxy phénol novolac ;
- les résines dérivées du bisphénol F ;
- les dérivés des phénols polynucléaires et des glycidyl éther;
- les résines cycloaliphatiques ;
- les résines dérivées d'amines aromatiques telles que :
   - les dérivés du tétraglycidylméthylènedianiline
   - les dérivés du triglycidyl-p-aminophénol
   - les dérivés des triazines tels que le triglycidyl isocyanurate
- les résines dérivées de l'hydantoine.

Les résines utilisées dans la présente invention sont réticulables entre 180 et 250°C. On peut réticuler par exemple avec des amines telles que la diméthyléthanolamine et la méthylène dianiline ou des amides tels que la dicyandiamide ou encore des résines phénoliques.

Ces résines peuvent comprendre des additifs tels que des silicones, des pigments tels que dioxyde de titane, oxydes de fer, du noir de carbone, des charges telles que du carbonate de calcium, du talc ou du mica.

Le temps de gel est avantageusement compris entre 20 et 100 secondes, de préférence 40 à 85 secondes.

Le temps de gel est défini par la norme AFNOR NFA 49-706. C'est le temps nécessaire pour provoquer un accroissement rapide de la viscosité à une température déterminée.

Avantageusement, la T_{g} est de l'ordre de 90 à 120°C. Ces résines peuvent se présenter sous forme de poudre ou liquide qu'on projette sur la surface métallique préalablement dégraissée, sablée et chauffée.

L'épaisseur de la couche de résine epoxy peut être comprise entre 20 et 400 µm et de préférence entre 50 et 150 µm.

L'épaisseur de la couche de liant peut être comprise entre 100 et 500 µm et de préférence entre 200 et 350 µm.

L'épaisseur de la couche de polymère thermoplastique (PEMD) peut être comprise entre 0,5 et 5 mm et de préférence 1,5 et 3 mm.

On ne sortirait pas du cadre de l'invention en ajoutant à la résine epoxy, au liant et au polymère thermoplastique des charges, des anti-U.V., des pigments, des stabilisants, des ignifugeants.

La présente invention concerne aussi un procédé de fabrication de ces surfaces revêtues. La surface métallique est d'abord dégraissée, sablée puis chauffée. La résine epoxy est déposée sous forme liquide ou par projection ou projection électrostatique si c'est une poudre sur la surface métallique chauffée à 200 ~ 240°C. Après environ 20 secondes, c'est-à-dire, peu avant la fin du temps de gel avant que la résine ne soit réticulée pour qu'il reste des fonctions epoxydes pour réagir avec les greffons du liant, on dépose le liant soit par projection si celui-ci est en poudre, soit par couchage ou laminage. Ensuite, on dépose de la même façon le polymère thermoplastique (PEMD).

S'agissant de la surface extérieure de tubes métalliques, on procède de la même façon pour la résine epoxy puis le liant est soit déposé par projection si il est disponible en poudre soit le plus souvent extrudé dans une filière annulaire disposée concentriquement autour du tube. Le liant peut aussi être extrudé dans une filière plate produisant un ruban continu qu'on enroule autour du tube par exemple grâce à la rotation du tube sur lui-même. Le thermoplastique est déposé de la même façon.

Parmi les mélanges de la couche de liant des structures précédentes certains sont utiles dans les structures qu'on a décrit plus haut mais ils sont aussi utiles dans des structures multicouches.

Un mélange utile comme liant de coextrusion comprend :
■ (A) 50 à 100 parties d'un polyéthylène LLDPE de densité 0,910 à 0,930
■ (B) 0 à 50 parties d'un polymère choisi parmi (B1) le polypropylène homo ou copolymère, (B2) le poly(1-butène) homo ou copolymère et (B3) le polystyrène homo ou copolymère,
■ la quantité de (A) + (B) étant de 100 parties,
■ le mélange de (A) et (B) étant greffé par au moins 0,5 % en poids d'un monomère fonctionnel,
■ ce mélange greffé étant lui même dilué dans au moins un polyéthylène (C) LLDPE dont le comonomère a de 4 à 8 atomes de carbone et éventuellement dans au moins un polymère à caractère élastomérique (D).

La définition des constituants est la même que pour le liant de la structure.

Avantageusement le comonomère de (A) a de 4 à 8 atomes de carbone. Avantageusement (B) est (B1), qui peut être un mélange de plusieurs polymères, et comprend au moins 50 % et de préférence 75 % en moles de propylène. La quantité du monomère de greffage est le même que dans le liant de la structure, de même pour les proportions de (C) et (D).

La présente demande concerne aussi une structure multicouches composée d'une couche comprenant le liant précédent, et directement attachée à celle-ci une couche de résine polaire azotée ou oxygénée telle qu'une couche (E) d'une résine polyamide, d'un copolymère saponifié d'éthylène et d'acétate de vinyle, d'une résine polyester, d'un oxyde minéral déposé sur un polymère tel que le PE, le polyéthylène téréphtalate ou l'EVOH, ou bien une couche métallique.

Selon cette forme, le liant peut être utilisé comme film de protection.

Selon une autre variante, demande concerne aussi la structure précédente et directement attachée à celle-ci, du côté liant, une couche (F) à base de polyoléfine. La polyoléfine (F) peut être choisie parmi les polymères (A) et (B) précédents.

Ces structures sont utiles pour faire des emballages, par exemple des corps creux rigides tels que des flacons ou des bouteilles ou des poches souples, ou des films multicouches.

Ces liants sont utiles pour les structures suivantes :
PE/liant/EVOH/liant/PE (PE désigne le polyéthylène)
PE/liant/EVOH
PE/liant/PA
PP/liant/PA
PP/liant/EVOH/liant/PP (PP désigne le polypropylène).

Ces structures et ces emballages peuvent être fabriqués par coextrusion, lamination, extrusion-soufflage...

### Exemples

On a préparé les liants suivants :
Les pourcentages sont en poids
MAH désigne l'anhydride maléique
"g" signifie "greffé".
CC suivi d'un chiffre désigne le mélange de (A) et (B) qu'on a greffé, on le désigne aussi par "concentré".
   - Liant G1 :: 93,75 % LLDPE C₄ (d = 0,918 / MFI 2,8) + 6,25 % CC1
   - Liant G2 :: 87,5 % LLDPE C₄ (d = 0,918 / MFI 2,8) + 12,5 % CC1
   - Liant G3 :: 75 % LLDPE C₄ (d = 0,918 / MFI 2,8) + 25 % CC1

   → Concentré CC1 : PEHD (d = 0.953) g MAH 1,6 % MFI = 3,2
      - Liant G4: 95 % LLDPE C4 (d = 0,930 / MFI 4) + 5 % CC1
      - Liant G5: 90 % LLDPE C4 (d = 0,930 / MFI 4) + 10 % CC1
      - Liant G6 :: 85 % LLDPE C4 (d = 0,930 / MFI 4) + 15 % CC1
      - Liant G7 :: 95 % LLDPE C4 (d = 0,930/ MFI 4) + 5 % CC2
      - Liant G8 :: 90 % LLDPE C4 (d = 0,930 / MFI 4) + 10 % CC2
      - Liant G9 :: 85 % LLDPE C4 (d = 0,930 / MFI 4) + 15 % CC2
   → Concentré CC2 (80 % LLDPE C4 (0,930/4) + 20 % PP
      (MFI 1) cogreffé MAH 1,6 % - MFI 0,8
      - Liant G10 :: 90 % LLDPE C₄ (d = 0,930 / MFI 4) + 10 % CC3
      - Liant G11 :: 90 % LLDPE C₄ (d = 0,930/ MFI 4) + 10 % CC4
      - Liant G12 :: 90 % LLDPE C₄ (d = 0,930 / MFI 4) + 10 % CC5
   → Concentré CC3 (80 % LLDPE C8 (0,920/4) + 20 % PP
      (MFI 1) cogreffé MAH 1,5 % - MFI 0,33
   → Concentré CC4 (80 % HDPE (0,954/MFI 35) + 20 % PP
      (MFI 1) cogreffé MAH 1,5 % - MFI 4,6
   → Concentré CC5 (80 % HDPE (0,954/MFI 35) + 20 % PP
      (MFt 1) cogreffé MAH 3 % - MFI 0,7.

### Liants des exemples comparatifs

- Liant H0 :: Terpolymère éthylène/ / acrylate de n-butyle/MAH dans les proportions respectives suivantes en poids (91,4 / 6 / 2,6) MFI 5
- Liant H1 :: 45 % VLDPE (d = 0,910, MFI 0,9) + 55 % Terpolymère E/ BA /MAH
(91,4 / 6 / 2,6) MFI 3
- Liant H2 :: 70 % LLDPE C₄ (d = 0,918, MFI 2,8) + 30 % Terpolymère E/BA/MAH
(91 / 6 / 3) MFI 5
- Liant H3 :: 70 % LLDPE C₄ (d = 0,930, MFI 1) + 30 % Terpolymère E/BA/MAH
(91 / 6 / 3) MFI 5
- Liant H4 :: 75 % LLDPE C₄ (d = 0,918, MFI 2,8) + 25 % LLDPE greffé 0,4 % MAH (d = 0,920, MFI 1)
- Liant H5 :: 75 % LLDPE C₄ (d = 0,930, MFI 4) + 25 % greffé 0,4 % MAH (d = 0,920, MFI 1)
- Liant H6 :: 84 % LLDPE C₄ (d = 0,918, MFI 2,8) + 16 % CCO Concentré CCO : Mélange (75 % VLDPE d = 0,870 + 25 % PP (MFI 1)) cogreffé à 2,4 % MAH avec MFI 0,6

Des tubes d'acier ont été revêtus dans les conditions suivantes :
- Grenaillage du type → Etat de surface Sa 2½ → Rugosité Rz~70-80 µm
- Chauffage du tube par induction → 180 - 190°C
- Application du primaire époxy par poudrage électrostatique
- Extrusion de l'adhésif avec un temps époxy / adhésif de 20 sec.
- Extrusion du PEMD immédiatement après l'adhésif
- Refroidissement par une douche d'eau avec un temps époxy / refroidissement de 3 mn pour s'assurer de la réticulation complète de l'époxy.

Dans les exemples suivants, on utilise les produits ci-dessous : EUROKOTE 714-31PP désigne une résine époxy ayant une tg = 105°C et fournie par la Société BITUMES SPECIAUX et de caractéristiques :
Masse volumique à 23°C (NFT 30-043) : 1,5 ± 0,05 g/ml
Teneur en humidité (IBS 319): ≤0,50 %
Granulométrie (IBS 316) : diamètre médian 38 ± 4 µm
   refus à 96 µm < 10 %
Tg (NFA 49-706) : 105° ±5°C
Temps de gel 80 ± 10 s à 180°C.

Elle est désignée par Epoxy 2 dans la suite du texte.
→ Epoxy 1 : Eurokote 714.31 de Bitumes Spéciaux (temps gel à 180°C = 45 sec - Tg = 105°C)
   Cette couche primaire d'époxy a une épaisseur de 70 µm.
   Liant (250 µm)
   Couche externe (2,5 mm)
→ LDPE 1 : LDPE (densité 0,927 - MFI = 0,3) chargé à 2,5 % de noir de carbone et stabilisé thermiquement
→ PEMD 1 : PEMD (d = 0,946, MFI = 0,9) chargé à 2,5 % de noir de carbone et stabilisé thermiquement
→ PEMD 2 : PEMD (d = 0,941, MFI = 0,2) chargé à 2,3 % de noir de carbone et stabilisé thermiquement.

### Exemples comparatifs Comp 1 - Comp 2

Les systèmes de revêtement tri-couches sur base LDPE avec comme adhésif soit un terpolymère fortement réactif (teneur MAH > 2 %) H_{O} de l'exemple Comp 1), soit une dilution de ce terpolymère dans un VLDPE (H₁ de l'exemple Comp 2) permettent d'obtenir une excellente adhérence à température ambiante (> 900 N/5 cm avec rupture de la polyoléfine). Toutefois, les forces de pelage aux températures élevées sont nettement insuffisantes.

### Exemples comparatifs Comp 2- Comp 3

L'utilisation d'un PEMD (exemple Comp 3) en lieu et place du PEBD 1 (exemple Comp 2) permet d'améliorer les adhérences aux hautes températures. Toutefois, les forces de pelage à 23°C - 50°C sont nettement insuffisantes, signe d'une incompatibilité Adhésif / Polyoléfine. D'où l'intérêt d'une sélection adéquate du couple Adhésif / Polyoléfine.

### Exemples comparatifs Comp 3 - Comp 4 - Comp 5

Les exemples Comp 3 - Comp 4 - Comp 5 décrivent des liants H₁, H₂, H₃, obtenus par dilution du terpolymère Hₒ dans différentes bases de polyéthylène VLDPE (H₁), LLDPE 0,918 (H₂), LLDPE 0,930 (H₃).

La dilution d'un terpolymère fortement réactif (>2 % MAH) dans une base PE quelle que soit sa nature (VLDPE, LLDPE,...) ne permet pas d'atteindre les niveaux d'adhérence souhaités (>600 N/5 cm à 23°C, >500 N/5 cm à 50°C, >200 N/5 cm à 70°C et 150 N/5 cm à 80°C).

### Exemples comparatifs Comp 6 - Comp 7

Il est connu dans le domaine de la coextrusion de film multicouches PE/liant/PA ou PE/liant/EVOH/liant/PE que l'utilisation en tant que liant d'un LLDPE g MAH pur (l'indice "g" désigne un greffage) ou dilué dans un PE permet d'obtenir de bonnes adhérences. De même, dans le secteur du revêtement de pipe tri-couches PEBD et PEMD, la dilution d'un LLDPE greffé MAH à 0,4 % dans des bases LLDPE d = 0,918 (adhésif H₄ de l'exemple Comp 6) ou LLDPE d = 0,930 (adhésif H₅ de l'exemple Comp 7) sont des solutions pour obtenir une bonne adhésion avec les LDPE, LLDPE et MDPE. Le niveau d'adhérence est satisfaisant à température ambiante mais décroît trop rapidement lorsque la température augmente (<500 N/5 cm à 50°C, <200 N/5 cm à 70°C, <150 N/5 cm à 80°C).

### Exemple comparatif Comp 8

L'exemple Comp 8 décrit la formulation du liant H₆ obtenue par dilution d'un mélange (VLDPE + PP) cogreffé MAH à haute teneur (2,6 %) selon le brevet EP 802 207 dilué dans un LLDPE C₄ 0,918. Elle ne permet pas d'obtenir une adhésion satisfaisante quelle que soit la température du test de pelage considérée.

**Tableau 1**

| | | | | Force de pelage | | | |
|---|---|---|---|---|---|---|---|
| Ex | Epoxy | Adhésif | Polyoléfine | 23°C | 50°C | 70°C | 80°C |
| Comp 1 | Epoxy 1 | H₀ | PEBD 1 | >940 | 405 | 180 | 54 |
| Comp 2 | Epoxy 1 | H₁ | PEBD 1 | > 910 | 480 | 210 | 75 |
| Comp 3 | Epoxy 2 | H₁ | PEMD 1 | 390 | 350 | 233 | 156 |
| Comp 4 | Epoxy 2 | H₂ | PEMD 1 | 350 | 268 | 151 | 112 |
| Comp 5 | Epoxy 2 | H₃ | PEMD 1 | 277 | 209 | 190 | 150 |
| Comp 6 | Epoxy 2 | H₄ | PEMD 1 | 1002 | 360 | 207 | 141 |
| Comp 7 | Epoxy 2 | H₅ | PEMD 1 | 530 | 282 | 163 | 95 |
| Comp 8 | Epoxy 2 | H₆ | PEMD 1 | 230 | 60 | 20 | 10 |

### Exemples suivant l'invention

### Exemples Ex 1 - Ex 2 - Ex 3

Les exemples Ex 1 - Ex 2 - Ex 3 décrivent les formulations des adhésifs G1 - G2 et G3 obtenus par dilution d'un concentré CC1 (PEHD greffé MAH 1,6 %) à des teneurs respectivement de 6,25, 12,5 et 25 % dans un LLDPE C4 de densité 0,918. Ces combinaisons permettent d'obtenir une adhérence élevée sur tout le domaine de température considérée.

### Exemples Ex 4 - Ex 5 - Ex 6

Les exemples Ex 4, Ex 5 et Ex 6 décrivent les formulations des adhésifs G4, G5 et G6 obtenues par dilution du même concentré CC1 (PEHD greffé MAH 1,6 %) utilisé dans les formulations des liants G1 - G2 - G3 des exemples Ex 1 - Ex 2 - Ex 3 mais dans un LLDPE C4 de densité supérieure (0,930 au lieu de 0,918) avec des teneurs respectives de 5-10-15 %. Ces nouvelles combinaisons Base / Concentré permettent d'améliorer de façon significative les valeurs d'adhérence de 20°C à 80°C. A la température ambiante, une rupture de PEMD est observée limitant la valeur de la force de pelage mesurée (ex > 1281 N/5 cm).

### Exemples Ex 7 - Ex 8 - Ex 9

Les exemples Ex 7 - Ex 8 - Ex 9 décrivent les formulations des liants G7 - G8 - G9 qui consistent en une dilution du concentré CC2 (LLDPE / PP cogreffé MAH 1,6 %) dans un LLDPE C4 de densité 0,930 à des teneurs respectivement de 5-10-15 % pds. De telles compositions permettent également d'obtenir des adhérences exceptionnelles à température ambiante (>1000 N/5 cm avec rupture du PEMD) et satisfaisantes à hautes températures (>200°C à 80°C).

### Exemples Ex 10 - Ex 11 - Ex 12 - Ex 13

L'exemple Ex 10 décrit l'utilisation du liant G8 précédemment décrit dans l'exemple Ex 8 mais en association avec le PEMD 2 dont le MFI est inférieur à celui du PEMD 1 précédemment utilisé dans l'exemple Ex 8 (MFI 0,2 au lieu de 0,6). Cette combinaison permet également d'obtenir des forces de pelage élevées sur toute la plage de température recherchée, voire légèrement améliorées.

Les exemples Ex 10 - Ex 11 - Ex 12 - Ex 13 décrivent les performances des liants G8 - G10 - G11 - G12 qui présentent une composition similaire (90 % LLDPE C4 d = 0,930 MFI4 + 10 % CC) avec respectivement les concentrés CC2, CC4 et CC5 qui se caractérisent comme étant des cogreffés PE / PP à haute teneur en MAH (>1,5 %). Les différentes compositions permettent d'obtenir des adhérences élevées sur toute la gamme de températures (>1000 N/5 cm à 23°C et >200 N/5 cm à 80°C).

**Tableau 2**

| | | | | Adhésion N / 5 cm | | | |
|---|---|---|---|---|---|---|---|
| Ex | Epoxy (70 µm) | Adhésif (250 µm) | PEMD (2,5 µm) | 23°C | 50°C | 70°C | 80°C |
| Ex 1 | Epoxy 2 | G₁ | PEMD 1 | 966 | 582 | 242 | 167 |
| Ex 2 | Epoxy 2 | G₂ | PEMD 1 | 827 | 746 | 292 | 198 |
| Ex 3 | Epoxy 2 | G₃ | PEMD 1 | 845 | 511 | 320 | 170 |
| Ex 4 | Epoxy 2 | G₄ | PEMD 1 | >1281 | >1082 | 423 | 349 |
| Ex 5 | Epoxy 2 | G₅ | PEMD 1 | >1061 | 653 | 456 | 340 |
| Ex 6 | Epoxy 2 | G₆ | PEMD 1 | >1224 | 657 | 452 | 337 |
| Ex 7 | Epoxy 2 | G₇ | PEMD 1 | >1073 | 519 | 277 | 206 |
| Ex 8 | Epoxy 2 | G₈ | PEMD 1 | >1169 | 528 | 314 | 259 |
| Ex 9 | Epoxy 2 | Gg | PEMD 1 | >1123 | 552 | 289 | 227 |
| Ex 10 | Epoxy 2 | G₈ | PEMD 2 | >1147 | 653 | - | 387 |
| Ex 11 | Epoxy 2 | G₁₀ | PEMD 2 | 1057 | 553 | - | 235 |
| Ex 12 | Epoxy 2 | G₁₁ | PEMD 2 | >1200 | 732 | - | 363 |
| Ex 13 | Epoxy 2 | G₁₂ | PEMD 2 | > 1100 | 632 | - | 367 |

## Revendications

1. Structure multicouche comprenant successivement :
- une couche de résine polaire azotée ou oxygénée telle qu'une couche (E) d'une résine polyamide, d'un copolymère saponifié d'éthylène et d'acétate de vinyle, d'une résine polyester, d'un oxyde minéral déposé sur un polymère tel que le PE, le polyéthylène téréphtalate ou l'EVOH, ou bien une couche métallique,
- une couche constituée d'un mélange utilisé comme liant de coextrusion et comprenant :
■ (A) 50 à 100 parties d'un polyéthylène homo ou copolymère comprenant au moins 75% (en moles) d'éthylène de densité comprise entre 0,910 et 0,98 g/cm³,
■ (B) 0 à 50 parties d'un polymère choisi parmi (B1) le polypropylène homo ou copolymère, comprenant au moins 75% (en moles) de propylène (B2) le poly(1-butène) homo ou copolymère et (B3) le polystyrène homo ou copolymère,
■ la quantité de (A) + (B) étant de 100 parties,
■ le mélange de (A) et (B) étant greffé par au moins 0,5 % en poids d'un monomère fonctionnel,
■ ce mélange greffé étant lui même dilué dans au moins un polyéthylène homo ou copolymère (C) ou dans au moins un polymère à caractère élastomérique (D) ou dans un mélange de (C) et (D).
- une couche (F) en polyéthylène de moyenne densité (PEMD) c'est-à-dire de densité comprise entre 0,94 et 0,950.

2. Structure selon la revendication 1 dans laquelle (A) est un LLDPE de densité 0,91 à 0.930, le comonomère ayant de 4 à 8 atomes de carbone.

3. Structure selon la revendication 1 dans laquelle (A) est un PEHD de densité au moins 0,945 et de préférence 0,950 à 0,980.

4. Structure selon l'une quelconque des revendications précédentes dans laquelle (B) est le polypropylène homo ou copolymère.

5. Structure selon l'une quelconque des revendications précédentes dans laquelle le monomère fonctionnel est l'anhydride maléique et sa teneur est de 1 à 5 % en poids de (A) + (B).

6. Structure selon l'une quelconque des revendications précédentes dans laquelle (C) est un LLDPE dont le comonomère a de 4 à 8 atomes de carbone.

7. Structure selon la revendication 6 dans laquelle la densité de (C) est d'au moins 0,9 et de préférence 0,910 à 0,930.

8. Structure selon l'une quelconque des revendications précédentes dans laquelle la quantité de (C) ou (D) ou (C) + (D) est de 97 à 75 parties pour 3 à 25 parties de (A) + (B), la quantité de (A) + (B) + (C) + (D) étant de 100 parties.

9. Structure selon l'une quelconque des revendications précédentes comprenant successivement une surface métallique revêtue d'au moins une couche de résine époxy disposée contre le métal, une couche de liant et une couche de PEMD.

10. Structure selon la revendication 9 dans laquelle la surface métallique est la surface extérieure d'un tuyau.

11. Tube ou tuyau comprenant une structure selon l'une des revendications 1 à 10.

12. Utilisation d'une structure multicouche selon l'une des revendications 1 à 10 pour fabriquer des tubes ou tuyaux.

13. Utilisation de tube ou tuyau selon la revendication 11 pour la construction d'oléoduc ou gazoduc.

## Patentansprüche

1. Mehrschichtstruktur, enthaltend nacheinander:
- eine Schicht aus stickstoffhaltigem oder sauerstoffhaltigem polarem Harz, wie eine Schicht (E) aus Polyamidharz, einem verseiften Ethylen-Vinylacetat-Copolymer, einem Polyesterharz, einem auf ein Polmyer, wie PE, Polyethylenterephthalat oder EVOH aufgebrachten anorganischen Oxid, oder auch eine Metallschicht,
- eine Schicht aus einer als Coextrusionsbindemittel verwendeten Mischung, enthaltend
■ (A) 50 bis 100 Teile eines Polyethylen-Homopolymers oder -Copolymers mit mindestens 75 Mol-% Ethylen und einer Dichte zwischen 0,910 und 0,98 g/cm³,
■ (B) 0 bis 50 Teile eines unter (B1) Polypropylen-Homopolymer oder -Copolymer mit mindestens 75 Mol-% Propylen (B2) Poly(1-buten)-Homopolymer oder -Copolymer und (B3) Polystyrol-Homopolymer oder - Copolymer ausgewählten Polymers,
■ wobei sich die Menge von (A)+(B) auf 100 Teile beläuft,
■ die Mischung von (A) und (B) mit mindestens 0,5 Gew.-% eines funktionellen Monomers gepfropft ist und
■ die gepfropfte Mischung ihrerseits in mindestens einem Polyethylen-Homopolymer oder -Copolymer (C) oder in mindestens einem elastomeren Polymer (D) oder in einer Mischung von (C) und (D) verdünnt ist,
- eine Schicht (F) aus Polyethylen mittlerer Dichte (MDPE), d.h. mit einer Dichte zwischen 0,94 und 0,950.

2. Struktur nach Anspruch 1, bei der (A) ein LLDPE mit einer Dichte von 0,91 bis 0,930 ist, wobei das Comonomer 4 bis 8 Kohlenstoffatome enthält.

3. Struktur nach Anspruch 1, bei der (A) ein HDPE mit einer Dichte von mindestens 0,945 und vorzugsweise von 0,950 bis 0,980 ist.

4. Struktur nach einem der vorhergehenden Ansprüche, bei der (B) Polypropylen-Homopolymer oder Copolymer ist.

5. Struktur nach einem der vorhergehenden Ansprüche, bei der es sich bei dem funktionellen Monomer um Maleinsäureanhydrid handelt und dessen Gehalt 1 bis 5 Gew.-%, bezogen auf (A)+(B), beträgt.

6. Struktur nach einem der vorhergehenden Ansprüche, bei der (C) ein LLDPE ist, dessen Comonomer 4 bis 8 Kohlenstoffatome enthält.

7. Struktur nach Anspruch 6, bei der (C) eine Dichte von mindestens 0,9 und vorzugsweise von 0,910 bis 0,930 aufweist.

8. Struktur nach einem der vorhergehenden Ansprüche, bei der die Menge an (C) bzw.(D) bzw. (C)+(D) 97 bis 75 Teile pro 3 bis 25 Teile (A)+(B) beträgt, wobei sich die Menge von (A)+(B)+(C)+(D) auf 100 Teile beläuft.

9. Struktur nach einem der vorhergehenden Ansprüche, enthaltend nacheinander eine Metalloberfläche, die mit mindestens einer auf das Metall aufgebrachten Epoxidharzschicht überzogen ist, eine Bindemittelschicht und eine MDPE-Schicht.

10. Struktur nach Anspruch 9, bei der es sich bei der Metalloberfläche um die Außenfläche eines Rohrs handelt.

11. Rohr mit einer Struktur gemäß einem der Ansprüche 1 bis 10.

12. Verwendung einer Mehrschichtstruktur nach einem der Ansprüche 1 bis 10 zur Herstellung von Rohren.

13. Verwendung eines Rohrs nach Anspruch 11 zur Konstruktion einer Öl- oder Gaspipeline.

## Claims

1. Multilayer structure comprising, in succession:
- a layer of nitrogen- or oxygen-containing polar resin such as a layer (E) of a polyamide resin, of a saponified ethylene/vinyl acetate copolymer, of a polyester resin, of a mineral oxide deposited on a polymer such as PE, polyethylene terephthalate or EVOH, or else a metal layer;
- a layer consisting of a blend used as coextrusion tie and comprising:
■ (A) 50 to 100 parts of a polyethylene homopolymer or copolymer comprising at least 75 mol% ethylene, of density between 0.910 and 0.98 g/cm³ and
■ (B) 0 to 50 parts of a polymer chosen from (B1) a polypropylene homopolymer or copolymer comprising at least 75 mol% propylene, (B2) a poly(1-butene) homopolymer or copolymer and (B3) a polystyrene homopolymer or copolymer,
■ the amount of (A) + (B) being 100 parts,
■ the blend of (A) and (B) being grafted by at least 0.5 wt% of a functional monomer and
■ this grafted blend itself being diluted in at least one polyethylene homopolymer or copolymer (C) or in at least one polymer (D) of elastomeric character or in a blend of (C) and (D);
- a layer (F) of medium-density polyethylene (MDPE), that is to say one with a density between 0.94 and 0.950.

2. Structure according to Claim 1, in which (A) is an LLDPE with a density of 0.91 to 0.930, the comonomer having from 4 to 8 carbon atoms.

3. Structure according to Claim 1, in which (A) is an HDPE with a density of at least 0.945 and preferably 0.950 to 0.980.

4. Structure according to any one of the preceding claims, in which (B) is the polypropylene homopolymer or copolymer.

5. Structure according to any one of the preceding claims, in which the functional monomer is maleic anhydride and its content is from 1 to 5% by weight of (A) + (B).

6. Structure according to any one of the preceding claims, in which (C) is an LLDPE, the comonomer of which has from 4 to 8 carbon atoms.

7. Structure according to Claim 6, in which the density of (C) is at least 0.9 and preferably 0.910 to 0.930.

8. Structure according to any one of the preceding claims, in which the quantity of (C) or (D) or (C) + (D) is from 97 to 75 parts per 3 to 25 parts of (A) + (B), the amount of (A) + (B) + (C) + (D) being 100 parts.

9. Structure according to any one of the preceding claims, comprising, in succession, a metal surface coated with at least one epoxy resin layer placed against the metal, a tie layer and an MDPE layer.

10. Structure according to Claim 9, in which the metal surface is the external surface of a pipe.

11. Tube or pipe comprising a structure according to one of Claims 1 to 10.

12. Use of a multilayer structure according to one of Claims 1 to 10 for manufacturing tubes or pipes.

13. Use of the tube or pipe according to Claim 11 for the construction of an oil pipeline or gas pipeline.
